# EUROPEAN PATENT SPECIFICATION

(11) **EP 2 202 985 B1**
(45) Date of publication and mention of the grant of the patent: **18.01.2017**
(21) Application number: 08841850.4
(22) Date of filing: 15.10.2008
(51) Int. Cl.: H04N 19/176, H04N 19/147, H04N 19/109, H04N 19/51, H04N 19/52, H04N 19/70, H04N 19/61

(54) **AN INTERFRAME PREDICTION ENCODING/DECODING METHOD AND APPARATUS**
VERFAHREN UND VORRICHTUNG FÜR BILD-ZU-BILD-PRÄDIKTIONSKODIERUNG/-DEKODIERUNG
PROCÉDÉ ET APPAREIL DE CODAGE/DÉCODAGE DE PRÉDICTION ENTRE TRAMES

(30) Priority: 15.10.2007 CN 200710181831; 08.01.2008 CN 200810002875
(43) Date of publication of application: 30.06.2010
(73) Proprietor: Huawei Technologies Co., Ltd., Longgang District Shenzhen, Guangdong 518129 (CN)
(72) Inventor: XIONG, Lianhuan, Shenzhen Guangdong 518129 (CN); KAMP, Steffen, Shenzhen Guangdong 518129 (CN); EVERTZ, Michael, Shenzhen Guangdong 518129 (CN); WIEN, Mathias, Shenzhen Guangdong 518129 (CN)
(74) Representative: Körber, Martin Hans
(86) International application number: PCT/CN2008/072690
(87) International publication number: WO 2009/052742

(56) References cited:
- CN-A- 1 893 652
- CN-A- 1 976 476
- SUGIMOTO K ET AL: "Inter frame coding with template matching spatio-temporal prediction", IMAGE PROCESSING, 2004. ICIP '04. 2004 INTERNATIONAL CONFERENCE ON SINGAPORE 24-27 OCT. 2004, PISCATAWAY, NJ, USA,IEEE, vol. 1, 24 October 2004 (2004-10-24), pages 465-468, XP010784855, DOI: DOI:10.1109/ICIP.2004.1418791 ISBN: 978-0-7803-8554-2
- YOSHINORI SUZUKI ET AL: "Inter Frame Coding with Template Matching Averaging", IMAGE PROCESSING, 2007. ICIP 2007. IEEE INTERNATIONAL CONFERENCE ON, IEEE, PI, 1 September 2007 (2007-09-01), pages III-409, XP031158091, ISBN: 978-1-4244-1436-9
- YOSHINORI SUZUKI ET AL: "Block-Based Reduced Resolution Inter Frame Coding with Template Matching Prediction", IMAGE PROCESSING, 2006 IEEE INTERNATIONAL CONFERENCE ON, IEEE, PI, 1 October 2006 (2006-10-01), pages 1701-1704, XP031048983, ISBN: 978-1-4244-0480-3
- WIEGAND T ET AL: "Rate-constrained coder control and comparison of video coding standards", IEEE TRANSACTIONS ON CIRCUITS AND SYSTEMS FOR VIDEO TECHNOLOGY, IEEE SERVICE CENTER, PISCATAWAY, NJ, US, vol. 13, no. 7, 1 July 2003 (2003-07-01), pages 688-703, XP011099260, ISSN: 1051-8215, DOI: 10.1109/TCSVT.2003.815168
- THIOW KENG TAN ET AL: "Intra Prediction by Template Matching", IMAGE PROCESSING, 2006 IEEE INTERNATIONAL CONFERENCE ON, IEEE, PI, 1 October 2006 (2006-10-01), pages 1693-1696, XP031048981, ISBN: 978-1-4244-0480-3
- STEFFEN KAMP ET AL: "Decoder side motion vector derivation for inter frame video coding", IMAGE PROCESSING, 2008. ICIP 2008. 15TH IEEE INTERNATIONAL CONFERENCE, IEEE, PISCATAWAY, NJ, USA, 12 October 2008 (2008-10-12), pages 1120-1123, XP031374203, ISBN: 978-1-4244-1765-0
- STEFFEN KAMP ET AL: "Decoder Side Motion Vector Derivation", 82. MPEG MEETING; 22-10-2007 - 26-10-2007; SHENZHEN; (MOTION PICTURE EXPERT GROUP OR ISO/IEC JTC1/SC29/WG11),, 16 October 2007 (2007-10-16), XP030043523,
- KAMP S ET AL: "Decoder side motion vector derivation", 33. VCEG MEETING; 82. MPEG MEETING; 20-10-2007 - 20-10-2007; SHENZHEN; (VIDEO CODING EXPERTS GROUP OF ITU-T SG.16),, 20 October 2007 (2007-10-20), pages 1-24, XP007912737,

## Description

### FIELD OF THE INVENTION

The present invention relates to a video coding technology, and more particularly to inter-frame prediction coding method and device.

### RELATED ART

In video coding based on hybrid coding technology, inter-frame prediction technology is widely applied. The inter-frame prediction is a technology for image prediction based on adjacent frames by using time redundancy of data, namely the correlation of pixels among adjacent frames in a motion image sequence. Statistically, the luminance value of only less than 10% of the pixels changes more than 2% in two subsequent frames of a motion image, while the chromatic value changes even less.

Currently, variations in motion-compensation based inter-frame prediction technology are reflected by differences in the number of reference frames, reference direction, pixel precision and size division of block. The technical essentials include the following:
1. Use of matching blocks of different sizes, such as a 16x16 macroblock, or the 16x16 macroblock being further divided into smaller blocks sized as for instance 16x8, 8x16, 8x8 and 4x4 to perform motion matching search; 2. Motion vector precision and pixel interpolation; motion estimation includes integral pixel motion estimation and non-integral pixel motion estimation, and the non-integral pixel motion estimation further includes half-pixel motion estimation and quarter-pixel motion estimation; 3. Reference frame, including forward reference frame and backward reference frame, or single reference frame and multiple reference frames; 4. Motion vector (MV) prediction, wherein an encoded motion vector is used to predict the current motion vector, and the difference between the current vector and the predicted vector is subsequently transmitted.

Based on the inter-frame prediction technology, video coding standards currently available and coding standards under formulation, such as H.264, digital audio/video coding technology standard workgroup (AVS), H.264 scalable video coding (SVC) and H.264 multi-view video coding (MVC), all propose motion-compensation based inter-frame prediction technology, as the technology is capable of greatly improving coding efficiency.

In inter-frame prediction with motion compensation, the motion estimation technology is employed at the encoder to obtain motion vector information for motion estimation, and the motion vector information is written into the bitstream for transmission to the decoder. The bitstream transmitted from the encoder further includes macroblock type and residual information. The decoder uses the motion vector information decoded from the bitstream to perform motion compensation to thereby decode the image. The motion vector information takes a great part of the bitstream in the image bitstream encoded by using inter-frame prediction technology.

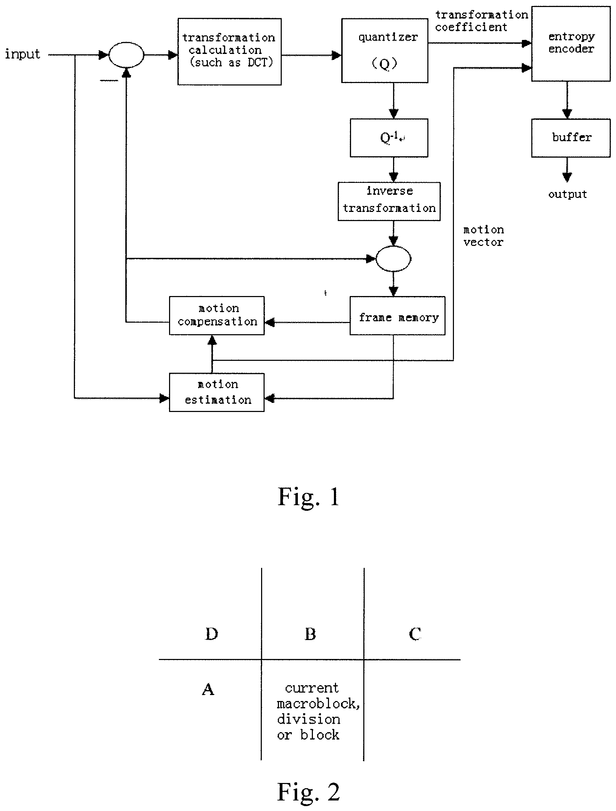

Fig. 1 is a schematic diagram illustrating implementation of the prior art motion-compensation based inter-frame prediction technology. As shown in Fig. 1, an input frame is stored in a frame memory after going through such processes as transform calculation, quantization, inverse quantization and inverse transform; subsequently, the system performs motion estimation for the currently input frame according to the previous frame stored in the frame memory to obtain motion vector, wherein the motion estimation process can be performed by using any motion estimation algorithm in the prior art; motion compensation is performed according to the motion estimation result; the result after motion compensation is subjected to such processes as transform calculation, quantization and encoding, and output to the decoder.

Many motion-compensation based inter-frame prediction technologies have been defined in the prior art. For instance, in the inter-frame prediction of the prior art H.264/advanced video coding (AVC), the decoder generates a prediction signal of a corresponding position in the reference frame according to the motion vector information decoded from the bitstream , and obtains luminance value of the pixel at the corresponding position after the decoding according to the obtained prediction signal and residual information carried in the bitstream, namely transform coefficient information; while motion vector information of the current block is encoded at the encoder, the motion vectors of the blocks adjacent to the current block are used to perform motion vector prediction of the current block to reduce bitstream necessary to transmit motion vector information of the current block.

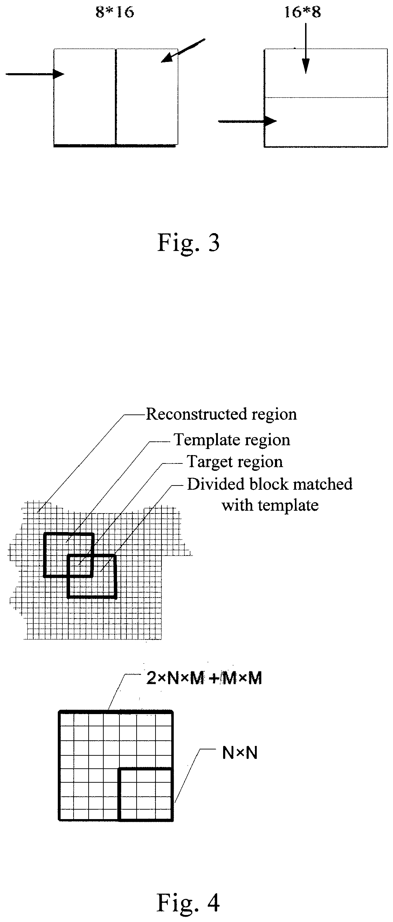

Fig. 2 is a schematic diagram illustrating the prior art motion vector prediction mode. In Fig. 2, the motion vector prediction (MVP) value of the current block can be deduced from the motion vectors of blocks A, B, C and D adjacent to the current block. The current block in this context can be a macroblock, a block or division. According to the division of the current block, the prediction of MVP can be classified into middle value prediction and non-middle value prediction. When the current block is divided as shown in Fig. 3, non-middle value prediction can be employed. Specifically, if it is divided into 8x16 blocks, when the left block is the current block, its MVP equals to MVA (the motion vector of the adjacent block A), and when the right block is the current block, its MVP equals to MVC; if it is divided into 16x8 blocks, MVP of the upper block equals to MVB, and MVP of the lower block equals to MVA. Middle value prediction can be employed in the remaining circumstances, i.e. MVP of the current block equals to a middle value of MVA, MVB and MVC.

After MVP of the current block is obtained, motion vector difference (MVD) can be further calculated, namely MVD = MV-MVP, where MV is the motion vector of the current block estimated by using any prior art motion estimation algorithm. Then, MVD is entropy encoded, written into the bitstream, and transmitted to the decoder.

Although the foregoing process can achieve motion-compensation based inter-frame prediction , this process requires that the motion vector information is explicitly written into the bitstream for subsequent transmission to the decoder, which additionally increases code rates.

In prior art motion-compensation based inter-frame prediction technologies, a Skip mode is provided in addition to using the motion vector prediction technology to improve coding efficiency. The bitstream to which the mode corresponds merely carries therewith macroblock mode information in the macroblock type, and does not carry motion vector information and residual information. in this case, the decoder can obtain the motion vectors of the blocks adjacent to the macroblock in the current frame according to the macroblock mode information decoded from the received bitstream, and deduce the motion vector of the current block according to the motion vector information of the adjacent block. The reconstruction value of the current block can be replaced with a prediction value at a corresponding position of the reference frame after determining the corresponding position of the current block in the reference frame according to the motion vector information of the current block.

An inter-frame prediction mode based on the template matching technology is also proposed in the prior art. The template matching technology is for deducing a prediction signal for a target region of NxN pixels, namely the current block. Because the target region is not yet reconstructed, it is possible to define a template in reconstructed regions adjacent to the target region. Fig. 4 is a schematic diagram illustrating a prior art way of defining a template. In general, an L-shaped region is selected from the upper and left regions of the target region as a template. The template size M is defined as the number of pixels in a horizontal direction starting from the left side of the left boundary of the target region covered by the template, and it can of course also be defined as the number of pixels in a vertical direction starting from the upper side of the upper boundary of the target region covered by the template. As can be known from Fig. 4, the number of pixels of the region covered by the template is 2xNxM+MxM.

In practical application, templates of other shapes can be used in addition to the L-shaped. It is also possible to set different weights for different regions in the template to increase precision during subsequent calculation of cost function.
The process of executing template matching is similar to the matching mode in conventional motion estimation, namely to calculate the cost function of the template corresponding to different positions during search in different regions of the reference frame. The cost function in this context can be an absolute sum of the pixels in the template region and the corresponding pixels in regions during matching search in the reference frame. Of course, the cost function can also be a variance or other cost functions including flat restriction to the motion vector field. The searching process of template matching can be performed in different searching ranges or with different searching modes upon practical demand; for instance, the searching mode that combines integral-pixel with half-pixel can be employed to reduce complexity of the template matching process.

In the template matching inter-frame prediction mode, the bitstream transmitted from the encoder to the decoder includes the macroblock type information of the current block, and can further include the residual information. On receipt of the bitstream, the decoder finds out the motion vector corresponding to the current block in the template matching mode, then finds out the corresponding position of the current block in the reference frame, and takes the pixel value at the corresponding position or the pixel value at the corresponding position plus the residual information as the pixel value of the current block after decoding.

When the template matching mode is employed to perform encoding, it is required to add a macroblock type to identify whether the current block is encoded in the currently available motion compensation mode or the template matching mode. However, in this case, because it is required to introduce a particular macroblock type to transmit identifier information of the template matching mode, additional code rate is increased.

SUGIMOTO K. et al: "Inter frame coding with template matching spatio-temporal prediction", IMAGE PROCESSING, 2004. ICIP '04. 2004 INTERNATIONAL CONFERENCE ON SINGAPORE 24-27 OCT. 2004, PISCATAWAY, NJ, USA, IEEE, vol. 1, 24 October 2004 (2004-10-24), pages 465-468 describes an algorithm proposed for predicting pixels for inter frame coding without side information. The method proposed in this document is related to exploit both spatial and temporal correlations at once to predict the pixels to be encoded. The prediction is achieved by using a template matching mechanism, with reference to previously reconstructed groups of pixels in the same frame or adjacent frames, to fill in the pixels of target regions of a frame.

YOSHINORI SUZUKI et al: "Inter Frame Coding with Template Matching Averaging", IMAGE PROCESSING, 2007. ICIP 2007. IEEE INTERNATIONAL CONFERENCE ON, IEEE, PI, 1 September 2007 (2007-09-01), pages III-409 describes a template matching prediction based on a group of reconstructed pixels surrounding a target block enables prediction of pixels in the target block without motion information. The predictor of a target block is produced by minimizing the matching error of the template. Due to the freedom possessed by the template, the residuals of a target block may become large in flat regions.

YOSHINORI SUZUKI et al: "Block-Based Reduced Resolution Inter Frame Coding with Template Matching Prediction", IMAGE PROCESSING, 2006 IEEE INTERNATIONAL CONFERENCE ON, IEEE, PI, 1 October 2006 (2006-10-01), pages 1701-1704, describes a template matching prediction based on a group of reconstructed pixels surrounding a target block enables prediction of pixels in the target block without motion information. In this method, the predictor of a target block is produced by minimizing the matching error of the template. If the template contains features such as complex texture, an appropriate predictor can be produced. In flat regions, on the other hand, the residuals of a target block may become large due to the freedom possessed by the template.

WIEGAND T. et al: "Rate-constrained coder control and comparison of video coding standards", IEEE TRANSACTIONS ON CIRCUITS AND SYSTEMS FOR VIDEO TECHNOLOGY, IEEE SERVICE CENTER, PISCATAWAY, NJ, US, vol. 13, no. 7, 1 July 2003 (2003-07-01), pages 688-703 describes a unified approach to the coder control of video coding standards such as MPEC-2, H.263, MPEG-4, and the draft video coding standard H.264/AVC is presented. The performance of the various standards is compared by means of PSNR and subjective testing results.

THIOW KENG TAN et al: "Intra Prediction by Template Matching", IMAGE PROCESSING, 2006 IEEE INTERNATIONAL CONFERENCE ON, IEEE, PI, 1 October 2006 (2006-10-01), pages 1693-1696 describes that intra prediction is an effective method for reducing the coded information of an image or an intra frame within a video sequence. The conventional method today is to create a sample predictor block by extrapolating the reconstructed pixels surrounding the target block to be coded. The sample predictor block is subtracted from the target block and the resulting residual coded using transformation, quantization and entropy coding.

STEFFEN KAMP et al: "Decoder side motion vector derivation for inter frame video coding", IMAGE PROCESSING, 2008. ICIP 2008. 15TH IEEE INTERANTIONAL CONFERENCE, IEEE, PISCATAWAY, NJ, USA, 12 October 2008 (2008-10-12), pages 1120-1123 describes that using a template matching algorithm, motion information is derived at the decoder instead of explicitly coding the information into the bitstream. Based on Lagrangian rate-distortion optimisation, the encoder locally signals whether motion derivation or forward motion coding is used. While the method exploits multiple reference pictures for improved prediction performance and bitrate reduction, only a small template matching search range is required.

STEFFEN KAMP et al: "Decoder Side Motion Vector Derivation", 82. MPEG MEETING; 22-10-2007 - 26-10-2007; SHENZHEN; (MOTION PICTURE EXPERT GROUP OR ISO/IEC JTC1/SC29/WG11)" 16 October 2007 (2007-10-16) describes that in video coding, motion compensated inter-frame prediction accounts for a significant percentage of the compression efficiency. However, the coding of motion information requires a major part of the bit stream of such inter-coded pictures. In AVC the motion information is derived at the encoder side and coded into the bit stream, so the decoder can simply perform motion compensated prediction based on the decoded motion vector information. To reduce the data rate of the motion information a more complex decoder is allowed which independently derives motion information instead of transmitting the information directly in the bit stream.

KAMP S. et al: "Decoder side motion vector derivation", 33. VCEG MEETING; 82. MPEG MEETING; 20-10-2007 - 20-10-2007; SHENZHEN; (VIDEO CODING EXPERTS GROUP OF ITU-T SG.16)" 20 October 2007 (2007-10-20), pages 1-24, describes that in video coding, motion compensated inter-frame prediction accounts for a significant percentage of the compression efficiency. However, the coding of motion information requires a major part of the bit stream of such inter-coded pictures.

In H.264 the motion information is derived at the encoder side and coded into the bit stream, so the decoder can simply perform motion compensated prediction based on the decoded motion vector information. To reduce the data rate of the motion information a more complex decoder is allowed which independently derives motion information instead of transmitting the information directly in the bit stream.

During implementation of this invention, the inventors found that it is necessary to add additional bitstream information in the prior art encoding process, and the code rate is increased in various degrees.

### SUMMARY OF THE INVENTION

An embodiment of the present invention according to claim 1 provides an inter-frame prediction encoding method capable of saving code rates during the process of inter-frame prediction.

An embodiment of the present invention according to claim 5 provides an inter-frame prediction decoding method capable of saving code rates during the process of inter-frame prediction.

An embodiment of the present invention according to claim 8 provides an inter-frame prediction encoding device capable of saving code rates during the process of inter-frame prediction.

An embodiment of the present invention according to claim 9 provides an inter-frame prediction decoding device capable of saving code rates during the process of inter-frame prediction.

The technical solutions of embodiments of the present invention are realized as follows.

An embodiment of the present invention provides an inter-frame prediction encoding method for encoding in skip mode. The method includes: obtaining a template matching motion vector and a predictive motion vector of a current block; comparing the template matching motion vector and the predictive motion vector, if the template matching motion vector and the predictive motion vector of the current block are identical to each other, encoding only macroblock type information into a bitstream; if the template matching motion vector and the predictive motion vector of the current block are different from each other, encoding macroblock type information and a flag indicating whether to use template matching into a bitstream, to instruct a decoder to decode the bitstream in a template matching mode or a motion compensation mode.

An embodiment of the present invention provides an inter-frame prediction decoding method for decoding in skip mode. The method includes: receiving a bitstream from an encoder; obtaining a template matching motion vector and a predictive motion vector of a current block; comparing the template matching motion vector and the predictive motion vector, if the template matching motion vector and the predictive motion vector of the current block are identical to each other, decoding the bitstream in a motion compensation mode; if the template matching motion vector and the predictive motion vector of the current block are different from each other, performing decoding in a template matching mode or the motion compensation mode according to a flag which indicates whether to use template matching and is carried in the bitstream.

An embodiment of the present invention provides an inter-frame prediction encoding device for encoding in skip mode. The device includes: an obtaining unit configured to obtain a template matching motion vector and a predictive motion vector of a current block; and a determining unit comprising a comparing subunit and an encoding subunit; wherein the comparing subunit is configured to compare the template matching motion vector and the predictive motion vector of the current block, and transmit the comparing result to an encoding subunit; the encoding subunit is configured to perform encoding according to the comparing result by encoding only macroblock type information into a bitstream, if the comparing result is that the two are identical to each other, and encoding macroblock type information and a flag indicating whether to use template matching into a bitstream, if the comparing result is that the two are different from each other, to instruct a decoder to decode the bitstream in a template matching mode or a motion compensation mode.

An embodiment of the present invention provides an inter-frame prediction decoding device for decoding in skip mode. The device includes: a determining unit comprising a comparing subunit, wherein the comparing subunit is configured to receive a bitstream from the encoder; compare the template matching motion vector and the predictive motion vector of the current block; notify the decoding unit to decode the bitstream in a motion compensation mode, if the template matching motion vector and the predictive motion vector of the current block are identical to each other; and notify the decoding unit to perform decoding in a template matching mode or motion compensation mode according to a flag which indicates whether to use template matching and is carried in the bitstream, if the template matching motion vector and the predictive motion vector of the current block are different from each other.

By comparing with the prior art, the embodiments of the present invention possess the following advantages:

The technical solutions recited in the embodiments of the present invention flexibly select an optimized encoding and decoding mode that is most suited to the actual situation according to the obtained template matching motion vector and predictive motion vector of the current block, so as to achieve the object of saving code rates in the maximum degree.

### BRIEF DESCRIPTION OF THE DRAWINGS

Fig. 1 is a schematic diagram illustrating implementation of the motion-compensation based inter-frame prediction technology of the prior art;
Fig. 2 is a schematic diagram illustrating the prior art motion vector prediction mode;
Fig. 3 is a schematic diagram illustrating the division of the current block of the prior art;
Fig. 4 is a schematic diagram illustrating a way of defining a template of the prior art;
Fig. 5 is a flowchart illustrating a method embodiment of the present invention;
Fig. 6 is a flowchart illustrating encoding at the encoder in a method embodiment of the present invention;
Fig. 7 is a flowchart illustrating decoding at the decoder in a method embodiment of the present invention;
Fig. 8 is a schematic diagram illustrating the structure of an encoding device embodiment according to the present invention;
Fig. 9 is a schematic diagram illustrating the structure of a decoding device embodiment according to the present invention; and
Fig. 10 is a schematic diagram illustrating comparison encoding performance between technical solutions of embodiments of the present invention and the prior art.

### DETAILED DESCRIPTION

To make more apparent the objects, technical solutions and advantages of the present invention, the present invention is described in further detail below with reference to the accompanying drawings and embodiments.

In the embodiments of the present invention, the grammar element information contained in the bitstream is determined as follows: With the characteristic of generating motion vector information in template matching mode, the motion vector generated in template matching and the predictive motion vector of the prior art are taken as contextual information. The motion vector and the predictive motion vector are compared when the current block is encoded. In this way, the grammar element information is determined. The embodiments of the present invention can be implemented based on the P-Skip technology in the Skip technology of the prior art.

The technical solutions recited in the embodiments of the present invention extend the P-Skip technology of the prior art to provide a template matching prediction method that is based on a condition encoding flag. In the embodiments of the present invention, a macroblock adaptively changes the motion characteristic without special information about encoding motion vectors, and only few additional encoding is required.

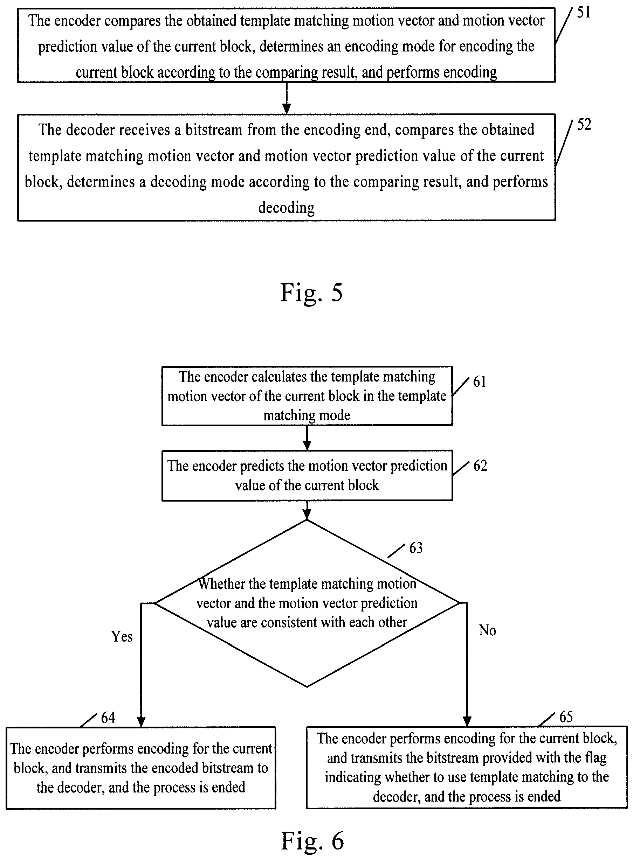

Fig. 5 is a flowchart illustrating a method embodiment of the present invention. As shown in Fig. 5, the method includes the following steps.

Step 51: The encoder compares the obtained template matching motion vector (TM_MV) and predictive motion vector of the current block, determines an encoding mode for encoding the current block according to the comparing result, and uses the determined encoding mode to perform encoding.

In this step, the way in which the encoder determines the encoding mode and performs encoding may be as follows: The encoder determines a bitstream element for encoding the current block, performs encoding according to the determined bitstream element, and transmits the bitstream to the decoder. The bitstream element in this embodiment is a macroblock type and/or a flag which indicates whether to use template matching. The way in which the encoder determines the bitstream element for encoding the current block may be as follows: The encoder determines whether the template matching motion vector and the predictive motion vector of the current block are identical to each other. If the two are identical to each other, only the macroblock type information is encoded into the bitstream; if the two are different from each other, the macroblock type and flag indicating whether to use template matching are encoded into the bitstream, to instruct the decoder to decode the received bitstream in the template matching mode or the motion compensation mode.

The method further includes, before encoding the macroblock type and the flag indicating whether to use template matching in the bitstream: the encoder determines whether the decoder is instructed to decode the bitstream in the template matching mode or the motion compensation mode. For instance, the encoder employs a rate-distortion optimization (RDO) algorithm to compare the rate-distortion performances of coding by using the template matching motion vector and the predictive motion vector, and instructs the decoder to perform decoding in the mode with better rate-distortion performance.

Step 52: The decoder receives a bitstream from the encoder, compares the obtained template matching motion vector and predictive motion vector of the current block, determines a decoding mode according to the comparing result, and performs decoding.

In this step, the decoder determines whether the inter-frame prediction mode for the current block is a P_Skip mode according to the macroblock type information carried in the received bitstream. If the inter-frame prediction mode is a P_Skip mode, the decoder compares whether the obtained template matching motion vector and predictive motion vector of the current block are identical to each other. If the two are identical to each other, the bitstream is decoded in the motion compensation mode; if the two are different from each other, decoding is performed in the template matching mode or the motion compensation mode according to the flag which indicates whether to use template matching and is carried in the bitstream. When parsing the boundary information of the current macroblock, the decoder obtains the template matching motion vector of the current macroblock by finding out matching block information in the reference frame of the current piece, where the matching block information is found out by decoding and reconstructing the pixels of the template. The parsing process and the decoding process are implemented in a mixed manner.

In another embodiment, step 52: The decoder receives a bitstream from the encoder, presets the template matching motion vector of the current block or determines the template matching block information to obtain the template matching motion vector of the current block, obtains the template matching motion vector of the current block, and performs decoding in the template matching mode according to the flag which indicates whether to use template matching and is carried in the bitstream.

In this step, the decoder determines whether the inter-frame prediction mode for the current block is a P_Skip mode according to macroblock type information carried in the received bitstream. If the inter-frame prediction mode for the current block is a P_Skip mode and the template matching motion vector of the current block in the macroblock can be obtained, the decoder determines whether the obtained template matching motion vector and predictive motion vector of the current block are identical to each other. If the two are identical to each other, the bitstream is decoded in the motion compensation mode; if the two are different from each other, decoding is performed in the template matching mode or the motion compensation mode according to the flag which indicates whether to use template matching and is carried in the bitstream. If the template matching motion vector of the current block in the macroblock cannot be obtained, decoding is performed in the template matching mode or the motion compensation mode according to the flag which indicates whether to use template matching and is carried in the bitstream. The parsing process and the decoding process are separately implemented.

The technical solutions of the present invention are described in further detail below for the encoder and the decoder, each, by specific embodiments.

Fig. 6 is a flowchart illustrating encoding at the encoder in a method embodiment of the present invention. As shown in Fig. 6, the method includes the following steps.

Step 61: The encoder calculates the template matching motion vector of the current block in the template matching mode.

In this step, when the encoder needs to encode the current block, the encoder first calculates the template matching motion vector of the current block in the template matching mode. The specific way of calculation is the same as that in the prior art. That is, matching search is performed in the reference frame for a pre-selected template region, such as an L-shaped template region, to find the optimum matching position, and the motion vector of the current block is calculated according to this position, namely a position offset of the current block in the current frame and in the reference frame.

Step 62: The encoder predicts the predictive motion vector of the current block.

Referring to Fig. 2 and Fig. 3 for the specific way of prediction, the encoder predicts the predictive motion vector of the current block according to the motion vectors of blocks A, B, C and D adjacent to the current block. According to the division of the current block, the prediction of MVP can be classified into middle value prediction and non-middle value prediction. When the current block is divided as shown in Fig. 3, non-middle value prediction can be employed. Middle value prediction can be employed in other circumstances, that is, MVP of the current block equals to a middle value of MVA, MVB and MVC.

Step 63: The encoder determines whether the template matching motion vector and the predictive motion vector are identical to each other. If the two are identical to each other, step 64 is performed; if the two are different from each other, the process goes to step 65.

Step 64: The encoder performs encoding for the current block, and transmits the encoded bitstream to the decoder, and the process ends.

In this step, because the template matching technology motion vector and the predictive motion vector are identical to each other, the encoder does not encode the flag indicating whether to use template matching during the encoding process. Thus, the bitstream transmitted from the encoder to the decoder contains only macroblock type information.

Step 65: The encoder performs encoding for the current block, and transmits the bitstream provided with the flag indicating whether to use template matching to the decoder, and the process ends.

Because the template matching technology motion vector and the predictive motion vector are different from each other, it is necessary for the encoder to add a flag indicating whether to use template matching to the encoded bitstream. Prior to this, the encoder should first determine whether the decoder is instructed to perform decoding in the template matching mode or the motion compensation mode according to the flag indicating whether to use template matching. The process of determining the decoding mode includes: The encoder encodes and decodes the template matching motion vector and the predictive motion vector separately, determines which of the two rounds of encoding and decoding has better performance by a rate-distortion optimization algorithm, for instance by comparing which round of encoding has the minimum deviation between the reconstructed image and the original image, and determines the specific setup of the flag indicating whether to use template matching according to the comparing result.

In specific implementation, it is possible to set a bit in the bitstream as the flag bit indicating whether to use template matching. If the way of coding according to the template matching motion vector has better performance, the flag bit indicating whether to use template matching is set as 1; if the way of coding according to the predictive motion vector has better performance, the flag indicating whether to use template matching is set as 0.

In this step, the bitstream transmitted from the encoder to the decoder contains the macroblock type and the flag indicating whether to use template matching.

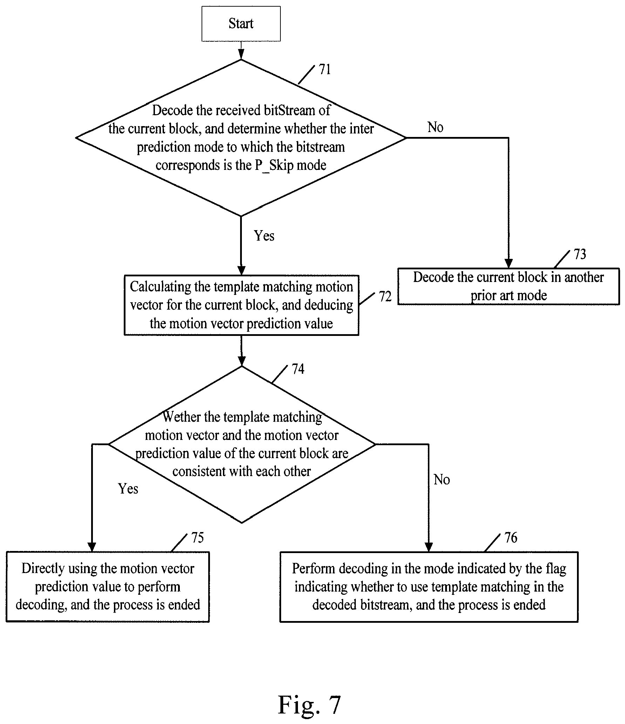

In the subsequent process, the decoder performs decoding according to the received bitstream. Fig. 7 is a flowchart illustrating decoding at the decoder in a method embodiment of the present invention. As shown in Fig. 7, the method includes the following steps.

Step 71: The decoder decodes the received bitstream of the current block, and determines whether the inter prediction mode to which the bitstream corresponds is the P_Skip mode. If yes, step 72 is performed; otherwise the process goes to step 73.

In this step, the decoder determines whether the inter-frame prediction mode to which the bitstream corresponds is the P_Skip mode according to the macroblock type information carried in the bitstream. The macroblock type information can be provided with a particular flag in an artificially prescribed way to indicate that the inter-frame prediction mode to which the bitstream corresponds is the P_Skip mode.

Step 72: The decoder calculates the template matching motion vector for the current block, and deduces the predictive motion vector, and the process goes to step 74.

The way of obtaining the template matching motion vector and the predictive motion vector is the same as that in the prior art, and is hence not described here.

During the process of calculating the template matching motion vector, the obtained predictive motion vector can be taken as a center to search within a predetermined region around the center, so as to quicken the searching process.

Step 73: The decoder decodes the current block in another conventional mode. Because this is irrelevant to the present invention, the specific decoding process is not described here.

Step 74: The decoder determines whether the template matching motion vector and the predictive motion vector of the current block are identical to each other. If the two are identical to each other, the process goes to step 75; if the two are different from each other, the process goes to step 76.

Step 75: The decoder directly uses the predictive motion vector to perform decoding, and the process ends.

If the template matching motion vector and the predictive motion vector are identical to each other, there is no flag indicating whether to use template matching in the bitstream, so that it is possible for the decoder to directly use the predictive motion vector of the current block to perform decoding. The specific way of decoding is the same as that in the prior art, and is hence not described here.

Step 76: The decoder performs decoding in the mode indicated by the flag indicating whether to use template matching carried in the decoded bitstream, and the process ends.

In this step, the decoder selects a motion vector according to the flag bit indicating whether to use template matching carried in the decoded bitstream, and performs subsequent decoding, and the process ends.

For instance, if the flag bit indicating whether to use template matching is set as 1, the decoder performs decoding in the template matching mode; if the flag indicating whether to use template matching is set as 0, the decoder performs decoding by using the motion vector precision value in the motion compensation mode. The process of decoding pertains to prior art, and is hence not described here.

As should be noted, in this embodiment, because the bitstream transmitted from the encoder does not contain residual information, it is merely necessary in the subsequent decoding process by the decoder to take the pixel value at the position in the reference frame corresponding to the current block as the pixel value of the current block after decoding.

In another embodiment, for the decoder, step 1 of the embodiment is the same as the foregoing step 71.

In this step, the decoder determines whether the inter-frame prediction mode to which the bitstream corresponds is the P_Skip mode according to the macroblock type information carried in the bitstream. The macroblock type information can be provided with a particular flag in an artificially prescribed mode to indicate that the inter-frame prediction mode to which the bitstream corresponds is the P_Skip mode.

Step 2: The decoder calculates the template matching motion vector for the current block, and deduces the predictive motion vector. If the template matching motion vector of the current block of the macroblock is unavailable, the process goes to step 3; if the template matching motion vector is available, the process goes to step 4.

Steps 4-6 are the same as the foregoing steps 74-76.

In step 6, the decoder selects a corresponding motion vector according to the indication of the flag bit indicating whether to use template matching in the decoded bitstream, performs subsequent decoding, and the process ends.

For instance, if the flag bit indicating whether to use template matching is set as 1, the decoder performs decoding in the template matching mode. In this case, the template matching motion vector is preset as 0 or the template information originally required for encoding is made to equal to the previous encoding template information, to be used for finding out the matching block information to obtain the template matching motion vector of the current block; if the flag bit indicating whether to use template matching is set as 0, the decoder uses the motion vector precision value to perform decoding in the motion compensation mode. The specific way of decoding pertains to prior art, and is hence not described here.

To achieve the processes shown in Fig. 6 and Fig. 7, the grammar of the current P_Skip mode should be modified, the modified grammar of the P_Skip mode is as follows:

| slice_data() { | **C** | **Descriptor** |
|---|---|---|
| if( entropy_coding_mode_flag) | | |
| while( !byte_aligned( ) ) | | |
| **cabac_alignment_one_bit** | 2 | f(1) |
| CurrMbAddr = first_mb_in_slice * ( 1 + MbaffFrameFlag ) | | |
| moreDataFlag = 1 | | |
| prevMbSkipped = 0 | | |
| do { | | |
| if( slice_type != I && slice_type != SI) | | |
| if( !entropy_coding_mode_flag) { | | |
| **mb_skip_run** | 2 | ue(v) |
| prevMbSkipped = (mb_skip_run > 0) | | |
| for( i=0; i<mb_skip_run; i++) | | |
| CurrMbAddr = NextMbAddress( CurrMbAddr ) | | |
| moreDataFlag = more_rbsp_data() | | |
| } else { | | |
| **mb_skip_flag** | 2 | ae(v) |
| if( mb_skip_flag && UseTMVector( ) ) | | |
| **tm_active_flag** //flag indicating whether to use template | 2 | ae(v) |
| moreDataFlag = !mb_skip_flag | | |
| } | | |
| ... | | |
| } while( moreDataFlag ) | | |
| } | | |

The function UserTMVector() is used to perform the template matching operation. If the template matching motion vector and the predictive motion vector of the current block are inconsistent, the function returns *true,* and otherwise returns *false.*

As should be noted, the description of the embodiments shown in Fig. 6 and Fig. 7 involves merely the single color component signal, namely luminance value. In practical application, by extending the target and template regions to pixels of identical positions of all components, the technical solutions of the embodiments of the present invention can also be applied to multi-component signals. But, if different components use different sampling rates, certain restrictive conditions should be satisfied. For instance, with regard to color sub-samples having the ratio of Y: Cb: Cr as 4: 2: 0, where Y indicates a luminance component, Cb indicates a blue chromatic component, and Cr indicates a red chromatic component, the size of the template region should be double size of the target region. Moreover, the technical solutions of the embodiments of the present invention are not only applicable to the single-view video coding environment as shown in Fig. 6 and Fig. 7, but are also applicable to the multi-view video coding environment.

The template matching motion vector and the predictive motion vector in the embodiments shown in Fig. 6 and Fig. 7 can be further used as contextual information to select a contextual model when the current block is coded. For instance, with regard to the Context-based Arithmetic Coding CABAC, it is possible to use the comparing relationship between the template matching motion vector and the predictive motion vector to decide the probability model for performing CABAC coding for the current block information. The specific process of encoding is as follows: calculating the template matching motion vector of the current block and obtaining the predictive motion vector; comparing the template matching motion vector and the predictive motion vector, if the two are identical to each other, a probability model P1 is selected to encode the current block; if the two are different from each other, a probability model P2 is selected to perform encoding.

The specific process of decoding is as follows: calculating the template matching motion vector of the current block and obtaining the predictive motion vector; comparing the template matching motion vector and the predictive motion vector, if the two are identical to each other, the probability model P1 is selected to decode the current block; if the two are different from each other, the probability model P2 is selected to perform decoding.

Because CABAC coding belongs to the prior art, and it should be clear for a person skilled in the art to understand its realization process; therefore, it is not described here.

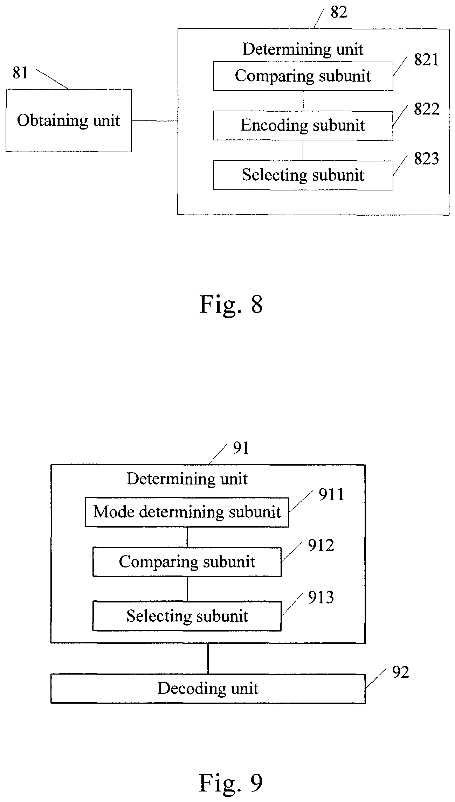

Based on the foregoing methods, Fig. 8 is a schematic diagram illustrating the structure of an encoding device embodiment according to the present invention. As shown in Fig. 8, the device includes: an obtaining unit 81 configured to obtain a template matching motion vector and a predictive motion vector of a current block; and the determining unit 82 configured to compare whether the template matching motion vector information and the predictive motion vector are identical to each other, determine an encoding mode according to the comparing result and perform encoding.

The determining unit 82 includes: a comparing subunit 821 configured to determine whether the template matching motion vector and the predictive motion vector of the current block are identical to each other, and transmit the comparing result to an encoding subunit 822; and the encoding subunit 822 configured to perform encoding according to the comparing result, encode only macroblock type information into the bitstream if the comparing result is that the two are identical to each other, and encode the macroblock type and a flag indicating whether to use template matching into the bitstream if the comparing result is that the two are different from each other, to instruct the decoder to decode the bitstream in a template matching mode or a motion compensation mode. The encoding subunit 822 is further configured to compare different performances of coding by using the template matching motion vector and the predictive motion vector and instruct the decoder to perform decoding in the mode with better performance, if the comparing result is that the two are different from each other.

The determining unit 82 may further include: a selecting subunit 823 configured to select a model to encode the current block according to the comparing result of the template matching motion vector and the predictive motion vector of the current block, and notify the encoding subunit 822.

Fig. 9 is a schematic diagram illustrating the structure of a decoding device embodiment according to the present invention. As shown in Fig. 9, the device includes: a determining unit 91 configured to receive a bitstream from the encoder, compare whether an obtained template matching motion vector and predictive motion vector of a current block are identical to each other, and determine a decoding mode according to the comparing result; and a decoding unit 92 configured to perform decoding according to the determined decoding mode.

The determining unit 91 may include: a comparing subunit 912 configured to receive a bitstream from the encoder, compare whether the template matching motion vector and the predictive motion vector of the current block are identical to each other, notify the decoding unit 92 to decode the bitstream in a motion compensation mode if the two are identical to each other, and notify the decoding unit 92 to perform decoding in a template matching mode or the motion compensation mode if the two are different from each other, according to a flag which indicates whether to use template matching and is carried in the bitstream.

Moreover, the determining unit 91 may further include: a mode determining subunit 911 configured to notify the comparing subunit 912 to perform its own function after determining that the inter-frame prediction mode for the current block is a P_Skip mode according to the macroblock type information carried in the received bitstream; and a selecting subunit 913 configured to select a model to decode the bitstream according to the comparing result of the template matching motion vector and the predictive motion vector of the current block, and notify the decoding unit 92.

Refer to the description of the corresponding methods for the specific operational processes of the embodiments of Fig. 8 and Fig. 9, and therefore are not described here.

Seen as such, with the technical solutions of the embodiments according to the present invention, the template matching motion vector and the predictive motion vector are taken as contextual information, and the information contained in the current bitstream is determined and coded by comparison. Because the technical solutions of the embodiments according to the present invention are based on the P_Skip mode, no additional bitstream is increased, whereby it is possible to save the transfer cost used for transferring the motion vector, and more options are provided for the motion vector prediction. At the same time, the contextual decision information such as entropy coding can be provided as information available by both of the encoder and the decoder for the current coding, thereby improving adaptability of the technology, and improving coding efficiency.

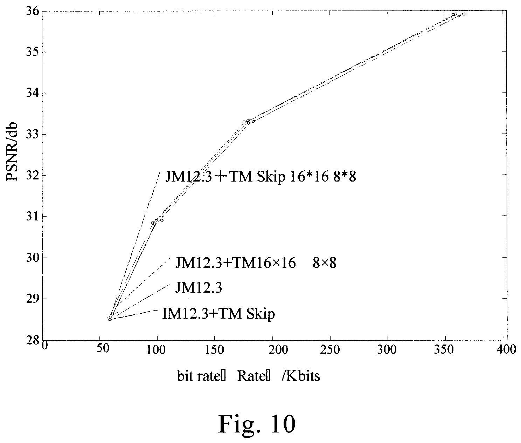

Fig. 10 is a schematic diagram illustrating comparison between the technical solutions of embodiments of the present invention and the prior art in terms of encoding performance. As shown in Fig. 10, supposing that the sequence coding type is IPPP, that is to say, the first frame is encoded in the intraframe prediction mode, while the remaining frames are encoded in the inter-frame prediction mode, wherein JM12.3 is the technical effect of using the conventional motion compensation mode on the H.264/AVC platform; TM Skip is the technical effect of using the technical solutions of the present invention on the H.264/AVC platform; TM 16x16 8x8 is the technical effect of using the conventional template matching mode; and TM Skip 16x16 8x8 is the technical effect of using the conventional template matching mode in combination with the technical solutions of the present invention. The horizontal coordinate in Fig. 10 represents the code rate, and the vertical coordinate represents the signal-to-noise ratio (PSNR), namely the difference between the reconstructed image and the original image. As can be seen from Fig. 10, an excellent effect of saving code rate can be achieved by the technical solutions of the embodiments according to the present invention.

As should be clear to a person skilled in the art through the above descriptions of the embodiments, the present invention can be implemented via hardware, or via software and necessary hardware general platform. Based on such understanding, the technical solutions of the present invention can be embodied in the form of a software product, which can be stored in a nonvolatile storage medium (such as a CD-ROM, a U disk, or a movable hard disk) and contains a plurality of instructions enabling a computer device (such as a personal computer, a server, or a network device) to execute the methods recited in the embodiments of the present invention.

In summary, the above descriptions are merely preferred embodiments of the present invention, which not restrict the protection scope of the present invention. All modifications, equivalent substitutions and improvements made without departing from the scope of the present invention shall fall within the protection scope of the present invention.

## Claims

1. An inter-frame prediction encoding method for encoding in skip mode, comprising:
obtaining a template matching motion vector (61) and a predictive motion vector (62) of a current block;
**characterized in that** the method further comprises:
comparing (63) the template matching motion vector and the predictive motion vector, if the template matching motion vector and the predictive motion vector of the current block are identical to each other, encoding (64) only macroblock type information into a bitstream; if the template matching motion vector and the predictive motion vector of the current block are different from each other, encoding (65) macroblock type information and a flag indicating whether to use template matching into a bitstream, to instruct a decoder to decode the bitstream in a template matching mode or a motion compensation mode.

2. The method according to claim 1, wherein during the process of obtaining the template matching motion vector of the current block, the predictive motion vector of the current block is taken as a center to perform matching search within a predetermined range around the center.

3. The method according to claim 1, wherein the step of determining if the template matching motion vector and the predictive motion vector of the current block are identical to or different from each other comprises: selecting a model to encode the current block according to the comparing result, and performing encoding according to the selected encoding model.

4. The method according to claim 1, further comprising, after determining an encoding mode according to the comparing result and performing encoding:
using the obtained template matching motion vector for motion vector prediction of a subsequent current block.

5. An inter-frame prediction decoding method for decoding in skip mode, comprising:
receiving (71) a bitstream from an encoder;
obtaining (72) a template matching motion vector and a predictive motion vector of a current block;
**characterized in that** the method further comprises:
comparing (74) the template matching motion vector and the predictive motion vector, if the template matching motion vector and the predictive motion vector of the current block are identical to each other, decoding (75) the bitstream in a motion compensation mode; if the template matching motion vector and the predictive motion vector of the current block are different from each other, performing decoding (76) in a template matching mode or the motion compensation mode according to a flag which indicates whether to use template matching and is carried in the bitstream.

6. The method according to claim 5, further comprising, before comparing the template matching motion vector and the predictive motion vector:
determining (72) that an inter-frame prediction mode for the current block is a P_Skip mode according to macroblock type carried in the bitstream.

7. The method according to claim 5, wherein during the process of obtaining the template matching motion vector of the current block, the predictive motion vector of the current block is taken as a center to perform matching search within a predetermined range around the center.

8. An inter-frame prediction encoding device for encoding in skip mode, comprising:
an obtaining unit (81) configured to obtain a template matching motion vector and a predictive motion vector of a current block; and
a determining unit (82) comprising a comparing subunit (821) and an encoding subunit (822);
**characterized in that** the comparing subunit (821)is configured to compare the template matching motion vector and the predictive motion vector of the current block, and transmit the comparing result to an encoding subunit (822); the encoding subunit (822) is configured to perform encoding according to the comparing result by encoding only macroblock type information into a bitstream, if the comparing result is that the two are identical to each other, and encoding macroblock type information and a flag indicating whether to use template matching into a bitstream, if the comparing result is that the two are different from each other, to instruct a decoder to decode the bitstream in a template matching mode or a motion compensation mode.

9. An inter-frame prediction decoding device for decoding in skip mode, comprising:
a determining unit (91) comprising a comparing subunit (912), **characterized in that** the comparing subunit (912) is configured to receive a bitstream from the encoder; compare the template matching motion vector and the predictive motion vector of the current block; notify the decoding unit (92) to decode the bitstream in a motion compensation mode, if the template matching motion vector and the predictive motion vector of the current block are identical to each other; and notify the decoding unit (92) to perform decoding in a template matching mode or motion compensation mode according to a flag which indicates whether to use template matching and is carried in the bitstream, if the template matching motion vector and the predictive motion vector of the current block are different from each other.

10. The device according to claim 9, wherein the determining unit further comprises: a mode determining subunit (911) configured to notify the comparing subunit (912) to perform its own function after determining that an inter-frame prediction mode for the current block is a P_Skip mode according to macroblock type carried in the bitstream.

## Patentansprüche

1. Interframe-Prädiktionscodierverfahren zur Codierung im Skip-Modus, umfassend:
Beschaffen eines mit einer Vorlage übereinstimmenden Bewegungsvektors (61) und eines prädiktiven Bewegungsvektors (62) eines aktuellen Blocks;
**dadurch gekennzeichnet, dass** das Verfahren ferner umfasst:
Vergleichen (63) des mit einer Vorlage übereinstimmenden Bewegungsvektors und des prädiktiven Bewegungsvektors, Codieren (64), wenn der mit einer Vorlage übereinstimmende Bewegungsvektor und der prädiktive Bewegungsvektor des aktuellen Blocks miteinander identisch sind, nur von Makroblocktypinformationen in einen Bitstrom; Codieren (65), wenn der mit einer Vorlage übereinstimmende Bewegungsvektor und der prädiktive Bewegungsvektor des aktuellen Blocks voneinander verschieden sind, von Makroblocktypinformationen und eines Flags, das anzeigt, ob Vorlagenübereinstimmung verwendet werden soll, in einen Bitstrom, um einen Decoder anzuweisen, den Bitstrom in einem Vorlagenübereinstimmungsmodus oder einem Bewegungskompensationsmodus zu decodieren.

2. Verfahren nach Anspruch 1, wobei während des Prozesses des Beschaffens des mit einer Vorlage übereinstimmenden Bewegungsvektors des aktuellen Blocks der prädiktive Bewegungsvektor des aktuellen Blocks als ein Mittelpunkt zum Durchführen von Übereinstimmungssuche innerhalb eines vorbestimmten Bereichs um den Mittelpunkt genommen wird.

3. Verfahren nach Anspruch 1, wobei der Schritt des Bestimmens, ob der mit einer Vorlage übereinstimmende Bewegungsvektor und der prädiktive Bewegungsvektor des aktuellen Blocks miteinander identisch oder voneinander verschieden sind, umfasst: Auswählen eines Modells zum Codieren des aktuellen Blocks gemäß dem Vergleichsergebnis und Durchführen von Codierung gemäß dem ausgewählten Codiermodell.

4. Verfahren nach Anspruch 1, ferner umfassend nach dem Bestimmen eines Codiermodus gemäß dem Vergleichsergebnis und Durchführen von Codierung:
Verwenden des beschafften mit einer Vorlage übereinstimmenden Bewegungsvektors zur Bewegungsvektorprädiktion eines nachfolgenden aktuellen Blocks.

5. Interframe-Prädiktionsdecodierverfahren zur Decodierung im Skip-Modus, umfassend:
Empfangen (71) eines Bitstroms von einem Encoder;
Beschaffen (72) eines mit einer Vorlage übereinstimmenden Bewegungsvektors und eines prädiktiven Bewegungsvektors eines aktuellen Blocks;
**dadurch gekennzeichnet, dass** das Verfahren ferner umfasst:
Vergleichen (74) des mit einer Vorlage übereinstimmenden Bewegungsvektors und des prädiktiven Bewegungsvektors, Decodieren (75), wenn der mit einer Vorlage übereinstimmende Bewegungsvektor und der prädiktive Bewegungsvektor des aktuellen Blocks miteinander identisch sind, des Bitstroms in einem Bewegungskompensationsmodus; Durchführen, wenn der mit einer Vorlage übereinstimmende Bewegungsvektor und der prädiktive Bewegungsvektor des aktuellen Blocks voneinander verschieden sind, von Decodierung (76) gemäß einem Flag, das anzeigt, ob Vorlagenübereinstimmung verwendet werden soll, und im Bitstrom übertragen wird, in einem Vorlagenübereinstimmungsmodus oder dem Bewegungskompensationsmodus.

6. Verfahren nach Anspruch 5, ferner umfassend vor dem Vergleichen des mit einer Vorlage übereinstimmenden Bewegungsvektors und des prädiktiven Bewegungsvektors:
Bestimmen (72), dass ein Interframe-Prädiktionsmodus für den aktuellen Block ein P_Skip-Modus ist, gemäß dem Makroblocktyp, der im Bitstrom übertragen wird.

7. Verfahren nach Anspruch 5, wobei während des Prozesses des Beschaffens des mit einer Vorlage übereinstimmenden Bewegungsvektors des aktuellen Blocks der prädiktive Bewegungsvektor des aktuellen Blocks als ein Mittelpunkt zum Durchführen von Übereinstimmungssuche innerhalb eines vorbestimmten Bereichs um den Mittelpunkt genommen wird.

8. Interframe-Prädiktionscodiervorrichtung zur Codierung im Skip-Modus, umfassend:
eine Beschaffungseinheit (81), die so konfiguriert ist, dass sie einen mit einer Vorlage übereinstimmenden Bewegungsvektor und einen prädiktiven Bewegungsvektor eines aktuellen Blocks beschafft; und
eine Bestimmungseinheit (82), die eine Vergleichs-Untereinheit (821) und eine Codier-Untereinheit (822) umfasst;
**dadurch gekennzeichnet, dass**
die Vergleichs-Untereinheit (821) so konfiguriert ist, dass sie den mit einer Vorlage übereinstimmenden Bewegungsvektor und den prädiktiven Bewegungsvektor des aktuellen Blocks vergleicht und das Vergleichsergebnis an eine Codier-Untereinheit (822) sendet; die Codier-Untereinheit (822) so konfiguriert ist, dass sie Codierung gemäß dem Vergleichsergebnis durchführt, indem sie nur Makroblocktypinformationen in einen Bitstrom codiert, wenn das Vergleichsergebnis ist, dass die beiden identisch miteinander sind, und Makroblocktypinformationen und ein Flag, das anzeigt, ob Vorlagenübereinstimmung verwendet werden soll, in einen Bitstrom codiert, wenn das Vergleichsergebnis ist, dass die beiden voneinander verschieden sind, um einen Decoder anzuweisen, den Bitstrom in einem Vorlagenübereinstimmungsmodus oder einem Bewegungskompensationsmodus zu decodieren.

9. Interframe-Prädiktionsdecodiervorrichtung zur Decodierung im Skip-Modus, umfassend:
eine Bestimmungseinheit (91), die eine Vergleichs-Untereinheit (912) umfasst; **dadurch gekennzeichnet, dass**
die Vergleichs-Untereinheit (912) so konfiguriert ist, dass sie einen Bitstrom vom Encoder empfangt; den mit einer Vorlage übereinstimmenden Bewegungsvektor und den prädiktiven Bewegungsvektor des aktuellen Blocks vergleicht; die Decodiereinheit (92) benachrichtigt, den Bitstrom in einem Bewegungskompensationsmodus zu decodieren, wenn der mit einer Vorlage übereinstimmende Bewegungsvektor und der prädiktive Bewegungsvektor des aktuellen Blocks identisch miteinander sind, und die Decodiereinheit (92) benachrichtigt, Decodierung gemäß einem Flag, das anzeigt, ob Vorlagenübereinstimmung verwendet werden soll, und im Bitstrom übertragen wird, in einem Vorlagenübereinstimmungsmodus oder Bewegungskompensationsmodus durchzuführen, wenn der mit einer Vorlage übereinstimmende Bewegungsvektor des aktuellen Blocks und der prädiktive Bewegungsvektor voneinander verschieden sind.

10. Vorrichtung nach Anspruch 9, wobei die Bestimmungseinheit ferner umfasst:
eine Modusbestimmung-Untereinheit (911), die so konfiguriert ist, dass sie die Vergleichs-Untereinheit (912) nach dem Bestimmen gemäß dem im Bitstrom übertragenen Makroblocktyp, dass ein Interframe-Prädiktionsmodus für den aktuellen Block ein P_Skip-Modus ist, benachrichtigt, ihre eigene Funktion auszuführen.

## Revendications

1. Procédé de codage prédictif inter-trames pour coder en mode de saut, comprenant :
l'obtention d'un vecteur de mouvement par concordance matricielle (61) et d'un vecteur de mouvement prédictif (62) d'un bloc courant ;
**caractérisé en ce que** le procédé comprend en outre :
la comparaison (63) du vecteur de mouvement par concordance matricielle et du vecteur de mouvement prédictif, si le vecteur de mouvement par concordance matricielle et le vecteur de mouvement prédictif du bloc courant sont identiques, le codage (64) uniquement d'informations de type de macrobloc en un train binaire ; si le vecteur de mouvement par concordance matricielle et le vecteur de mouvement prédictif sont différents, le codage (65) d'informations de type de macrobloc et d'un fanion indiquant qu'il convient ou non d'utiliser la concordance matricielle en un train binaire, pour donner l'instruction à un décodeur de décoder le train binaire dans un mode de correspondance matricielle ou un mode de compensation de mouvement.

2. Procédé selon la revendication 1, dans lequel durant le processus d'obtention du vecteur de mouvement par concordance matricielle du bloc courant, le vecteur de mouvement prédictif du bloc courant est utilisé comme centre afin d'exécuter une recherche de concordance dans une plage prédéterminée autour du centre.

3. Procédé selon la revendication 1, dans lequel l'étape de détermination que le vecteur de mouvement par concordance matricielle et le vecteur de mouvement prédictif du bloc courant sont identiques ou différents comprend : la sélection d'un modèle pour coder le bloc courant en fonction du résultat de la comparaison, et l'exécution du codage en fonction du modèle de codage sélectionné.

4. Procédé selon la revendication 1, comprenant en outre, après la détermination d'un mode de codage en fonction du résultat de la comparaison et l'exécution du codage :
l'utilisation du vecteur de mouvement par concordance matricielle obtenu pour la prédiction de vecteur de mouvement d'un bloc courant suivant.

5. Procédé de décodage prédictif inter-trames pour décoder en mode de saut, comprenant :
la réception (71) d'un train binaire depuis un codeur ;
l'obtention (72) d'un vecteur de mouvement par concordance matricielle et d'un vecteur de mouvement prédictif d'un bloc courant ;
**caractérisé en ce que** le procédé comprend en outre :
la comparaison (74) du vecteur de mouvement par concordance matricielle et du vecteur de mouvement prédictif, si le vecteur de mouvement par concordance matricielle et le vecteur de mouvement prédictif du bloc courant sont identiques, le décodage (75) du train binaire dans un mode de compensation de mouvement ; si le vecteur de mouvement par concordance matricielle et le vecteur de mouvement prédictif du bloc courant sont différents, l'exécution du décodage (76) dans un mode de concordance matricielle ou le mode de compensation de mouvement en fonction d'un fanion qui indique qu'il convient ou non d'utiliser la concordance matricielle et qui est acheminé dans le train binaire.

6. Procédé selon la revendication 5, comprenant en outre, avant la comparaison du vecteur de mouvement par concordance matricielle et du vecteur de mouvement prédictif :
la détermination (72) qu'un mode de prédiction inter-trames du bloc courant est un mode P_Skip (saut de trames P) conformément au type de macrobloc acheminé dans le train binaire.

7. Procédé selon la revendication 5, dans lequel durant le processus d'obtention du vecteur de mouvement par concordance matricielle du bloc courant, le vecteur de mouvement prédictif du bloc courant est utilisé comme centre afin d'exécuter une recherche de concordance dans une plage prédéterminée autour du centre.

8. Dispositif de codage prédictif inter-trames pour coder en mode de saut, comprenant :
une unité d'obtention (81) configurée pour obtenir un vecteur de mouvement par concordance matricielle et un vecteur de mouvement prédictif d'un bloc courant ; et
une unité de détermination (82) comprenant une sous-unité de comparaison (821) et une sous-unité de codage (822) ;
**caractérisé en ce que** la sous-unité de comparaison (821) est configurée pour comparer le vecteur de mouvement par concordance matricielle et le vecteur de mouvement prédictif du bloc courant, et transmettre le résultat de la comparaison à une sous-unité de codage (822) ; la sous-unité de codage (822) est configuré pour exécuter le codage en fonction du résultat de la comparaison en codant uniquement des informations de type de macrobloc en un train binaire, si le résultat de la comparaison est que les deux vecteurs sont identiques, et coder des informations de type de macrobloc et un fanion indiquant qu'il convient ou non d'utiliser la concordance matricielle en un train binaire, si le résultat de la comparaison est que les deux vecteurs sont différents, pour donne l'instruction à un décodeur de décoder le train binaire dans un mode de concordance matricielle ou un mode de compensation de mouvement.

9. Dispositif de décodage prédictif inter-trames pour décoder en mode de saut, comprenant :
une unité de détermination (91) comprenant une sous-unité de comparaison (912), **caractérisé en ce que** la sous-unité de comparaison (912) est configurée pour recevoir un train binaire du codeur ; comparer le vecteur de mouvement par concordance matricielle et le vecteur de mouvement prédictif du bloc courant ; notifier à l'unité de décodage (92) de décoder le train binaire dans un mode de compensation de mouvement, si le vecteur de mouvement par concordance matricielle et le vecteur de mouvement prédictif du bloc courant sont identiques ; et notifier à l'unité de décodage (92) d'exécuter le décodage dans un mode de concordance matricielle ou un mode de compensation de mouvement en fonction d'un fanion qui indique qu'il convient ou non d'utiliser la concordance matricielle et qui est acheminé dans le train binaire, si le vecteur de mouvement par concordance matricielle et le vecteur de mouvement prédictif du bloc courant sont différents.

10. Dispositif selon la revendication 9, dans lequel l'unité de détermination comprend en outre : une sous-unité de détermination de mode (911) configurée pour notifier à la sous-unité de comparaison (912) d'exécuter sa propre fonction après avoir déterminé qu'un mode de prédiction inter-trames du bloc courant est un mode P_Skip (saut de trames P) conformément au type de macrobloc acheminé dans le train binaire.
